# EUROPEAN PATENT APPLICATION

(11) **EP 3 269 482 A1**
(43) Date of publication of application: **17.01.2018**
(21) Application number: 16179269.2
(22) Date of filing: 13.07.2016
(51) Int. Cl.: B23D 55/08

(54) **A GUIDE BLOCK ASSEMBLY**

(71) Applicant: Luja Hansen, Soren, 5000 Odense C (DK)
(72) Inventor: Luja Hansen, Soren, 5000 Odense C (DK)
(74) Representative: Holme Patent A/S

(57) **Abstract**

A guide block assembly (1) serves for controlling a saw blade of a band saw during cutting. The guide block assembly includes a mounting part (2,3;32,3) having a rear part (2;32) adapted for securing the guide block assembly (1) to the band saw frame and a front part (3) for detachably securing a thrust part. The thrust part includes at least two thrust slats (4a,4b) detachable secured in respective at least two receiving means (10a,10b) of a front face of the front part (3) of the mounting part, which thrust slats (4a,4b) are aligned spaced apart from each other around a center section (22) of the front part without thrust part. Vibrations, chattering and heating of the saw blade are reduced substantially and may even be eliminated, and production rate and speed can be increased when using the guide block assembly.

## Description

The present invention relates to a guide block assembly for controlling a saw blade of a band saw during cutting, which guide block assembly includes a mounting part having a rear part adapted for securing the guide block assembly to the band saw frame and a front part for detachably securing a thrust part.

Bandsaws are used principally in woodworking, metalworking, and lumbering, but may be used to cut a variety of materials. The saw blade of a bandsaw is a continuous band of toothed metal rotating on opposing pulley wheels to cut the relevant material, often crowned pulley wheels, to help keep the saw blade aligned. Most bandsaws have at least two such co-planer pulley wheels or flywheels connected by a belt or chain rotating in the same plane, one of which is powered.

Thus the saw blade is mounted to orbit on the pulley wheels with a diameter large enough to prevent or reduce metal fatigue due to flexing when the saw blade repeatedly changes from a circular to a straight profile. When the bandsaw is run the saw blade unavoidably becomes stretched very tight, and during running the cutting edge heats up. These forces and temperatures cause the saw blade to deform with the fatigue strength of the saw metal being the limiting factor. Therefore bandsaws of large size need to have a deformation worked into the saw blade. This deformation counteracts the forces and heating of the saw blade during operation. The process of making this deformation is called "benching", which term equally often is used for the result of the "benching" process as well. This "benching" contributes in the leveling and tensioning of the saw blade when running around the pulley wheels offset from the rotation axes. Thus the benching deliberately deforms an un-mounted saw blade in a way that counteracts the operating stresses, and aims to allow the saw blade to pull flat and cut straight when in use.

The aim of paramount interest when using a bandsaw is to perform a uniform smooth cutting action. The load on the teeth of the saw blade must be kept under control, both as regards the curvature of the saw blade and the tensioning of the saw blade at the cutting location.

An example of a mechanism used to decrease transverse motion of the saw blade by applying tension to it, is one or more blade guides, which act to guide the blade during cutting.

Such a blade guide assembly may, typically for smaller band saws, be one or more sets of rollers each defining a low friction running surface, or for larger band saws, such as in a saw mill, alternatively be of the "sandwich" kind having a one-sided support surface and a thrust part. Irrespective of which kind, the blade guide is affixed to the band saw, so the blade guide helps in preventing transverse motion of the saw blade while minimally affecting the desired rotatory saw blade motion while still tensioning, in particular tensioning the saw blade around the cutting section of said saw blade.

One conventional guide block assembly of the "sandwich" kind utilizes a large thick trust block that covers the entire area of the front part to avoid residues, such as saw dust and resins, from the cutting process to get inside other parts of the guide block assembly. The surface of the large thrust block becomes uneven and the thickness of the thrust block becomes smaller during use. After a period of running time a worn thrust block must be replaced with a new thrust block, or the worn thrust block be trimmed and reinserted. The wear has a substantial impact on efficiency of the guide block assembly to keep the saw blade in the offset position tensioned away from the rotation axes and the tangent plane of the pulley wheels, thus the guide block assembly gradually looses its capability to properly tension the saw blade. To trim the workface of the thrust block the entire guide block can be dismantled. An already prepared other similar guide block assembly is then mounted, or the workface of the thrust block already in place is trimmed, optionally while it is still mounted to the front part, and the same guide block assembly is mounted to the frame of the band saw again. The thrust face, which is the workface, of this thick known thrust part can be made planar and smooth again several times but each time it is processed further in order to trim the workface it becomes thinner and the offset must be adjusted anew. Moreover, it is always the same face of the thrust part that is in action. The opposite face can never come in action due to the design of the thrush block being bound by the design of the front part. Thus the tensioning of the saw blade must be measured and adjusted again and again each time the thrust block needs processing to perform according to its intended function. Operational time is typically about 30-50 hours for a thrust block of a height of about 40-50 mm, e.g. when in use on large saw mills.

Another known conventional guide block assembly of the "sandwich" kind utilizes a single large trust plate that is thinner than the thrust block discussed above. This known thrust plate is mounted to the front part by clamping to a coupling means or by means of screws at the top and at the bottom of the front part with the result that the central area is free to bulge towards the band saw, thus the front face of the thrust plates becomes concave and can flex. The thrust plate covers the entire area of the front face of the guide block assembly. When its workface becomes worn the thrust plate is turned so the workface becomes the bearing face towards the front part, however not a good bearing face due to being worn, which creates a negative impact on cutting accuracy and cutting efficiency. Operational time is about 40-50 hours for a first run of a thrust plate of a height of about 40-50 mm, and the same after having being turned. After two such runs the thrust plate is discarded. A guide block assembly of this kind can e.g. be obtained from Interteknik Försäljning AB, Mallslingan 13, 18766 Täby, Sweden.

It has been realized that the center section of the thrust block and of the thrust plate may hardly be worn, and that this section of the thrust block or thrust plate has a very limited tensioning function.

The structure of the known guide block assemblies is a result of many years of tradition, and of the general belief among carpenters, operators and manufacturers of saw mills and band saws, that a large thrust face performs the best and the remaining parts of the guide block assembly shall be as little as possible exposed to the saw blade, the workpiece, as well as to residues that is created during cutting, which residues include both residues from the workpiece, such as sawdust and resins, but also residues worn off the thrust part, such as fibers.

This belief has established a prejudice within the art of band saws which deprives the skilled person from deviating from the known design of thrust parts.

The present invention aims to remedy the disadvantages of the prior art guide block assemblies of the sandwich kind. The present invention also aims to overcome the prejudices within the art of making guide block assemblies for band saws by providing alternatives to the known guide block assemblies.

It is main aspect of the present invention to provide a guide block assembly of the kind mentioned in the opening paragraph that allows the thrust parts to be replaced at minimum downtime of the band saw.

It is yet an aspect of the present invention to provide a guide block assembly of the kind mentioned in the opening paragraph that is easy and fast to mount to the band saw and makes the bandsaw cost-effective in use.

It is yet an aspect of the present invention to provide a guide block assembly of the kind mentioned in the opening paragraph that gives a bandsaw a higher output capacity than with a conventional guide block assembly.

It is yet an aspect of the present invention to provide a guide block assembly of the kind mentioned in the opening paragraph by means of which the vibration and the chatter of the saw blade are minimized.

It is yet an aspect of the present invention to provide a guide block assembly of the kind mentioned in the opening paragraph by means of which the development of thermal energy and heating of the saw blade during the cutting is reduced.

It is yet an aspect of the present invention to provide a guide block assembly of the kind mentioned in the opening paragraph that stabilizes and keeps the saw blade tensioned during cutting.

It is yet an aspect of the present invention to provide a guide block assembly of the kind mentioned in the opening paragraph that facilitates a clean cut.

It is yet an aspect of the present invention to provide a guide block assembly of the kind mentioned in the opening paragraph that prolongs the lifetime of the saw blade.

It is yet an aspect of the present invention to provide a guide block assembly that contributes to enhancing operational accuracy and consistency.

The novel and unique whereby these and other aspects are achieved according to the present inventions consists in that
- the thrust part includes at least two thrust slats detachable secured in respective at least two receiving means of or on a front face of the front part of the mounting part,
- which thrust slats are aligned spaced apart from each other.

Within the context of the present application the term "rear part" is the part of the guide block assembly used to mount the guide block assembly to the band saw at an appropriate location. The term "thrust part", "thrust block" or "thrust slat" is the part of the guide block assembly that is in contact with the orbiting saw blade to keep the saw blade stretched and under tension when the band saw is running offset. The term "front part" is the intermediate component(s) of the guide block assembly used to mount the thrust part to the rear part and allows the replacement of the "thrust part", "thrust block" or "thrust slat". The "rear part" and the "front" part may be an integral unit. The "rear" part may simply be the part of the front part that faces away from the saw band in use of the guide block assembly.

Bandsaw blades require tension and lots of it to consistently produce straight, uniform cuts, especially in thick or dense stock materials, such as thick workpieces. Most saw blade manufacturers recommend 100 N/mm² to 140 N/mm² for a common carbon-steel saw blade, and even higher tension of 175 N/mm² to 200 N/mm² for bimetal, spring-steel, and carbide-tipped saw blades because these materials are much stronger than the carbon-steel saw blades. Tension between 110 N/mm² - 300 N/mm² for saw blade of chromium-nickel steel is typical. The tighter the saw blade is stretched, the more rigid it becomes and the less tendency it will have to deflect in the cut.

The constant frictional contact between the stretched and tensioned saw blade results in heating of the saw blade. Moreover, this contact causes wear on the thrust part when the saw blade runs. The longer the thrust part is run over by the saw blade the more the thrust part is worn and the less efficient it becomes in keeping the saw blade stretched and tensioned.

As mentioned, the contact between thrust parts and orbiting saw blade generates a lot of heat, and thus a lot of deflection of the saw blade, and both the saw blade and the thrust parts becomes less and less efficient and capable of making smooth cuts. While the replacement, optional trimming, and subsequent fitting takes place the band saw is out of operation and valuable production time is thus lost.

For the present invention the thrust slat can be taken off the guide block assembly while the guide block assembly still is on the band saw. The worn thrust slat is simply slide sideways out of the receiving means via the end face of the front part. A new thrust slat is then promptly inserted by the reverse translatory motion, a sideways insertion from the end face of the front part. The thrust slats of the present invention are thin, and easy to handle, and the exchange of a thrust slat can be done, without using heavy tools, in a fast and efficient manner.

By spacing the thrust slats apart the combined area of workface in operative contact with the saw blade can be kept substantially the same as for a conventional thrust part but the total area of guide block assembly that faces the saw blade may be much larger because the height of the guide block assembly of the present invention becomes higher than for conventional guide block assemblies. Thus the total area of thrust part in contact with the saw blade need not be increased.

The guide block assembly serves to move the saw blade away from the rotation axes of the pulley wheels to arrange a cutting section of the cutting section of the saw blade offset and parallel to a tangent plane to the pulley wheels, where this cutting section of the saw blade is kept steady and under firm control. The radius of the curvature of the saw blade that runs over the combined workface of the opposite spaced apart thrust slats can for the design of guide block assemblies of the present invention advantageously be increased, so that the saw blade has a substantially smoother curvature when it passes over the guide block assembly. Thereby the stability of the saw blade becomes enhanced, chattering of said saw blade and production of thermal energy are reduced to an inferior level, or at least reduced substantially compared to when using known guide block assemblies.

A further advantage is the versatility of possible orientations. For example the thrust slat is dismantled, rotated 180° in the saw blade contact plane and reinserted in the same receiving means. In the alternative a thrust slat is simply taken out of a receiving means and inserted in a another receiving means in the same orientation, thus without having been rotated, to reuse a non-worn elongate part of a thrust slat. Yet another beneficial way of reusing the thrust slat of the present invention is to make the interior face, that has been spared by being hidden inside a free space in the receiving means, the new exterior face, thus turning the interior face of the thrust slat so it becomes the workface of the thrust slat. A worn face of the thrust slat can also be made functional again, e.g. by abrasion, polishing and/or cleaning processes. However such processing can be postponed for long because a thrust slat can be repositioned in four different useful orientations, each of which expose fresh thrust slat material to the saw blade without the need for the above processes of restoring a smooth workface of the thrust slat.

An alternative way of replacing a thrust slat, that is also possible but slightly more time-consuming, is to first dismantle the entire front part with the thrust slats, then the thrust slats are replaced as described above. Once the one or more new trusts slats are arranged in the receiving means, the refitted front part is mounted to the rear part again.

In case of uneven wear of the at least two thrust slats the operator can chose to maintain the least worn thrust slat(s) and only replace the thrust slat(s) that have been worn the most, or the operator may chose to swap two opposite thrust slats around and/or turn a thrust slat without making a huge negative impact on the uptime of the band saw. A thrust slat can even be made so thin that it is not worth refitting and reusing it. It may simply be disposable and for one-time use only.

By means of the thrust slats of the present inventions the operational consistency of the band saw is enhanced and cutting accuracy kept high for a long time. The offset of the saw band from the rotation axes of the opposite pulley wheels to the front face of the thrust slats can be kept substantially constant, thereby avoiding deviations in measure settings and/or impaired guiding of the saw blade. Furthermore, the improved control of the curvature and tension of the saw blade when it passes over the guide block assembly of the present invention reduces friction and thus reduces development of thermal energy.

The guide block assembly may comprise retaining means for retaining the thrust slats in the receiving means, which retaining means can be selected from the group comprising engagement means, force fitting means, snap coupling means, male/female coupling means, and at least one end stop at an end of the front part.

The end stops may be fastened to or in the vicinity of the end faces of the front part, e.g. one at each end, or just one end stop at one end face of the front part, simply by means of first screws. The front part may be detachable assembled with the rear part by means of second screws or bolts that extend through the front face of the front part between the thrust slats and into the rear part, thus not through the thrust slats.

End stops at opposite ends of the front part may serve to retain the thrust slats more or less firmly in the receiving means, or simply be provided to prevent access to tampering with the thrust slot. The thrust slats may be provided to prevent accidental release of the thrust slats. The end stops may also be contributory to the firm securing of the thrust slats in the receiving means.

Simply by releasing and temporarily removing one or both of the end stops the thrust slats become free to slide sideways out of the receiving means. The detached end stop(s) can quickly be mounted again, e.g. by means of screws, to close the receiving means at opposite ends thereby retaining the thrust slats firmly again ready for operation.

The second screws or bolts may be hidden behind the thrust slats or pass through the goods of the front part at a center section defined between the opposite spaced apart thrust slats.

As alternative to end stops for keeping the at least two thrust slats inside the associated at least two receiving means when the band saw runs the saw blade over said thrust slats, the front part and/or a thrust slat can have engagement means, force fitting means, snap coupling means, and/or male/female coupling means. Such means can conveniently be arranged on the interior side of the thrust slat and on the bottom of the receiving means to co-operate, optionally interconnect, with each other. For some of these embodiments the thrust slat has less possible orientation options than when using end stops because of a necessary structural modification of the interior face of the thrust slat. However, if e.g. the receiving means is sized and dimensioned to receive a slightly larger thrust slat, such as slightly thicker and/or higher than exactly defined by the receiving means, the thrust slat can be force-fittingly mounted in the receiving means. In this embodiment the four possible ways of using and reusing the thrust slat are preserved.

The guide block assembly of the present invention is superior to the conventional sandwich-structured guide block assembly on the one hand because the thrust slats can be replaced and mounted from the end face of the front part while the guide block assembly is still on the band saw, and on the other hand because the guide block assemblies of the present invention, which has a distance between opposite individual thrust slats, provide superior stability to the saw blade, less or even eliminated chattering, less stress at the entry and exit contact points/edges to the guide block assembly, and a substantial decrease in heat development. Wear down of the thrust slats may take comparatively longer when chattering of the saw blade and development of thermal energy is considerably reduced. In addition, not needing to take the guide block assembly off the saw blade for replacing a thrust slat, means less downtime, less material costs, and reduced production costs. Valuable production time can be saved when using the guide block assembly of the present invention. And moreover, the simple replacement process, as well as the improved cutting, makes the working environment far friendlier than when using the prior art guide block assemblies.

In an expedient embodiment the receiving means of the front part of the mounting part are opposite parallel grooves for detachably securing a respective thrust slat. One upper groove may be provided at the top of the front part and one lower groove may be provided at the bottom of the front part spaced apart from the upper groove. Emphasis is made that the terms "upper", "lower", "top" and "bottom" should not be construed as limiting the scope of the present invention. These terms is simply used in order to refer the mutual spacing of the receiving means and the thrust slats. Thus if a guide block assembly is turned 180° in a vertical plane "upper" may become "lower" and "top" may become "bottom". Two thrust slats may be provided symmetrically at the front face of the front part about a longitudinal axis of said front part. The outmost free face of the front face of the front part constitutes the bearing face which the thrust slats are pressed against by the saw blade. This, bearing face stops the thrust slat from being moved further towards the rear part by the pressure force subjected to it by said saw blade.

Any of the rear part and the front part may conveniently be made from solid metal blocks, preferably made from rectangular solid metal blocks. With regards to the front part a solid front part can easily be provided with the receiving means in form of grooves by milling or laser cutting. Coupling means for coupling the front part and the rear part together can be made in a similar manner.

In an embodiment that is particular easy to use at least one of the thrust slats is an H-profile and the corresponding receiving means is a C-groove.

Typically a front face of a front part may have two spaced apart, aligned receiving means in form of an upper C-groove and a lower C-groove. The opposite free ends of the C-shaped groove project as hooks at the front part. The opposite free ends fit slidingly inside the opposite gaps defined between the opposite legs of the H-shaped thrust slats. The upper receiving means and the lower receiving means with inserted associated thrust slats need not have entirely identical design. One set can e.g. be wider than the other or even have a different profile. The surface of the thrust slat that is in contact with the saw blade may be free of protrusions or other topography that might interfere on the saw blade during its orbiting. The thrust faces of the thrust slats, thus their workfaces, should at the best be as smooth as possible as long as possible. No part of the front part gets in direct contact with the saw blade. The thrust slat may in one embodiment have same width as the conventional thrust part but be less high. So even if the thrust slat is as thin or even thinner than the thrust plate of the prior art, the trust slat cannot bulge. It simply lacks free slat material to do so.

A thrust slate can e.g. be made of a hard fibre composite material such as carbon fibre, bakelite and/or fiber glass, and combinations thereof.

The receiving means are described as a female part and the thrust slat as a male part. Within the scope of the present invention the receiving means can also be the male part and the thrust slat be the female part. Any complementary coupling profiles are within the scope of the present invention.

In order to make the front part easy to detach from the rear part, said rear part may have a first coupling profile facing towards a mating second coupling profile of the front part. The first coupling profile can e.g. be a male coupling groove and the second coupling profile be a female elongate protrusion dimensioned to engage the male coupling groove, so that when the front part is assembled to the rear part mutual dislocation is effectively prevented.

An elongate center section of the front part between the spaced apart receiving means may in an advantageous embodiment have at least two through-openings configured for securing the front part to the rear part through the front face of said front part, e.g. by means of bolts that are countersunk in relation to the front face of the front part.

The length of a receiving means may be a bit longer than the length of a thrust slat to provide a slight degree of freedom to move from side to side when subjected to the force from the running saw blade. This freedom to move slightly from side to side provides space for the thrust slat to expand lengthwise when heated by the frictional contact with the saw blade so that the tensioning of the saw blade is almost unaltered irrespective of raised temperature and potential expansion of the thrust slat. The possibility of a thrust slat to travel slightly from side to side contributes to reduce development of frictional heat thereby prolonging the lifetime of the saw blade itself.

The deviation between the above lengths of a receiving means and of a thrust slat may be so inferior that it is hardly noticeable. The deviation may e.g. be between 0.1 mm and 1 mm.

Cutting without coolant agent, lubrication agents and/or cleaning agents may result in chattered cuts and/or burrs on the cut edge. Accordingly, such agents may be used to improve the cut of a band saw, to prolong the lifetime of the saw blade and to reduce development of heat during cutting and resulting deflection of the saw blade. Traditionally such agents are applied to the saw blade by spraying via special nozzles onto the saw blade while the saw blade orbits around the pulley wheels, and/or is applied via felt pads. The agents may be air, gas, oil or water, and combinations thereof.

Such separate nozzles are however not needed in an embodiment of the present invention where functionality of applying such an agent to the saw blade is integrated in the guide block assembly. To that aspect the rear part may have an integrated manifold for supplying the agent. The manifold may e.g. discharge the agents mentioned above, such as a lubricating oil, via a plurality of outlets at the center section of the front part free of thrust slat, thus in the gap between the thrust slats, e.g. a gap between two opposite elongate thrust slats mounted to an elongate front part.

An advantageously thrust slat may have a surface that reduce friction when said surface is brought in contact with the running saw blade.

A single end stop may span the open ends of at the at least two receiving means at the end faces of the front part and be secured to such an end face of the front part for retaining the at least two thrust slats using one and the same single mechanical component. Thus when a single end stop, which is situated at or on an end face of the front part, is released all thrust slats are set free to be pulled sideways out of the receiving means. Just one of the opposite end stops needs to be released in order to replace all thrust slats, however if both end stops are releasable/released it does not matter from which end replacement of thrust slats takes place. The operator can chose the most accessible and convenient end.

The actual area of thrust slats in contact with the saw band can, as already mentioned above, be the same as for a conventional thrust part simply by spacing the thrust slats apart and making the guide block assembly higher than the known guide block assembly. This design has the advantage that the path of the saw blade over the thrust slats becomes smooth compared to the paths when using the prior art guide block assemblies.

There are four points of discontinuity of the curvature of the orbiting offset saw blade, thus points where the band saw enters and exits the guide block assembly. Each point of discontinuity has an angle of incidence and an angle of reflection. For the present invention the angle of incidence and the angle of reflection may be of substantially same size for an offset saw blade.

In case of a vertical band saw where the band saw orbits in a vertical plane there may be an upper guide block assembly above a lower guide block assembly arranged around a cutting section of the saw blade. For the present invention the angle of reflection of the saw blade at the upper guide block assembly and the angle of incident of the saw blade at the lower guide block assembly are substantially the same with the aim of getting these angles as close to zero as possible. These angles can e.g. be between 5-15°. The smooth curvature of the saw blade when it passes over the guide block assemblies reduces stress at the saw blade substantially, as well as reduces wear of both saw blade and thrust slats. The tensioning and stability function is thereby improved, and the period until replacement of the thrust slats is needed is longer than for the known thrust parts so that operational and/or productive time of the band saw is prolonged.

The thrust slats are smaller and of less weight than the conventional thrust parts and thus easier to manipulate. Since less material is used for a thrust slat than for a conventional thrust part, the guide block assembly of the present invention is also less expensive. Yet a further advantage is that the complete guide block assembly need not be dismantled the band saw to replace a thrust slat. Since the pressure from the orbiting band saw itself suffice to keep a thrust slat in place inside a groove, thrust slats can simply be introduced from the end of a groove in a sliding fast movement and by a single operation. In case an end stop is provided at one end of a groove, although not mandatory, the replacement thrust slat can advantageously be inserted from the opposite end of the groove in a translatory motion. When the thrust slat hits on the end stop the operator knows that the thrust slat is in correct position and the band saw can be up and running within minutes without any tools have been needed. In case of an embodiment without end stops the operator may simply use his hand or another suitable means to temporarily mimic the end stop.

Preferably the thrust plate is 1/3 longer than the width of the saw blade. Since the thrust plate is worn the fastest at the 1/3 closest to the cutting edge of the saw blade the rest of the thrust slat can be reused without any trimming. Thus a thrust slat can be turned and rotated for a total of four uses without being trimmed.

The present invention further relates to a method of mounting thrust slats in the guide block assembly described above.

The method comprises the steps of
(a) inserting the at least two thrust slats into the respective at least two receiving means by sideways sliding from one end face of the front part towards the opposite end face of the front part, and optionally
(b) securing at least one end stop at an end face of the front part.

The securing of step (b) may conveniently be achieved e.g. by an end stop having an outline corresponding substantially to the cross-section of the front part, provided the end stop do not protrude beyond the thrust slats when mounted to the end face of the front part, e.g. by means of screws. The end stop must not contact the orbiting saw blade.

The present invention further relates to a method of mounting the guide block assembly described above to a band saw.

The method comprises
- mounting the front part to the rear part via the front face of the front part, and
- mounting the rear part to the band saw so that the thrust slats are in contact with the saw blade to tension said saw blade during cutting.

The distance between the individual thrust slats of a guide block assembly of the present invention, thus the gap between said opposite substantial parallel thrust slats that define the free center section, may be selected so that the total height of the work face of the guide block assembly is higher than conventionally.

A known thrust plate may e.g. be 40 mm, which also means that the total height of the associated known guide block assembly is close to 40 mm. For the present invention two thrust slats each being e.g. 20 mm high may be mounted spaced apart at a distance of e.g. 30 mm so that the total height of the guide block assembly is about 70 mm, which contribute to the increase the radius of curvature, and thus obtain a smooth curvature, of the band saw when it orbit over the guide block assembly. The above heights given for thrust slat and center section should not be construed as limiting the present invention. Even higher thrust slats and center sections are contemplated within the scope of the present invention. Heights of thrust slats between 10-100 mm are within said scope. Heights of center sections, thus the gap between the thrust slats, may be within same range.

The present invention further relates to a band saw provided with two guide block assemblies spaced apart from each other at a cutting section of the saw blade.

The present invention further relates to a thrust slat for the guide block assembly described above.

The invention will be described below with references to the drawing that shows exemplary embodiments of the invention.
Fig. 1 is an exploded perspective view of a first embodiment of a guide block assembly of the sandwich type according to the present invention,
fig. 2 shows the same in assembled state oblique from above,
fig. 3 shows the guide block assembly of fig. 5 seen from the end face,
fig. 4 is an end view of the front part with two mounted thrust slats,
fig. 5 is an enlarged scale view of the lower groove with the lower thrust slat,
fig. 6 is a transparent perspective view of a rear part of a second embodiment of a mounting part for a guide block assembly of the present invention,
fig. 7 shows two guide block assemblies mounted to distend a section of a saw blade during cutting a workpiece,
fig. 8 is a comparative principle sketch of the curvature of an offset saw blade of a vertical bands saw when the saw blade passes the thrust parts of two opposite guide block assemblies,
fig. 9a shows a principle sketch of the tensioning of a saw blade when it passes a known guide block assembly,
fig. 9b shows a principle sketch of the tensioning of a saw blade when using a higher guide block assembly than seen in fig. 9a, and
fig. 9c shows a principle sketch of the tensioning of a saw blade when it passes a guide block assembly of the present invention.

The embodiments of guide block assemblies shown in the drawings are described by reference to the orientation shown in the drawing. This orientation should not be construed as limiting, and the guide block assembly can be used in any possible position wherein the thrust part can be placed in contact with the offset saw blade to control its tensioning.

Emphasis is made that for the examples of embodiments described below the guide block assemblies are shown and described as having two separate main components, a front part and a rear part. Within the scope of the present invention, the front part and the rear part can however also be an integral unit. The rear part may alternatively simply be constituted by the part of the front part facing the frame of the band saw. Thus the part of the front part, or of an integral unit, not facing the saw blade functions as the rear part.

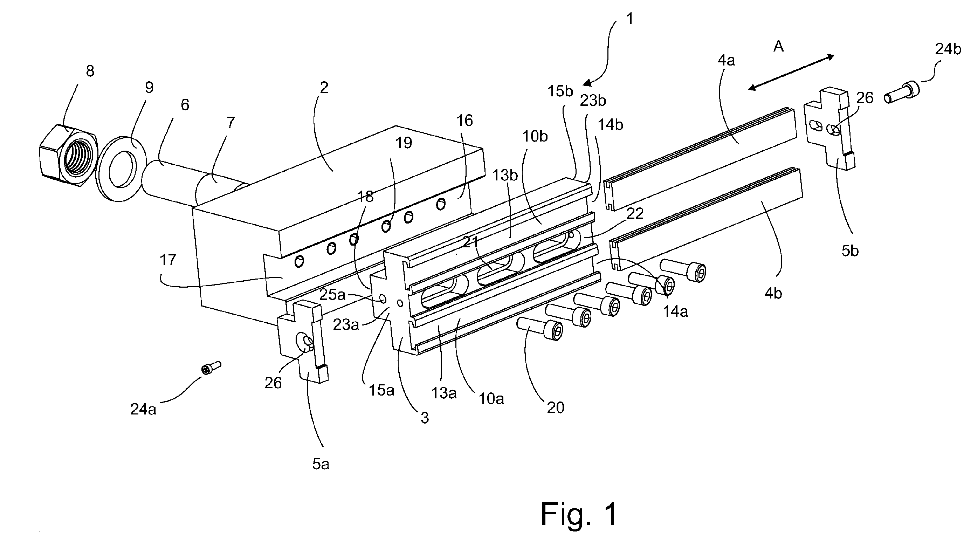

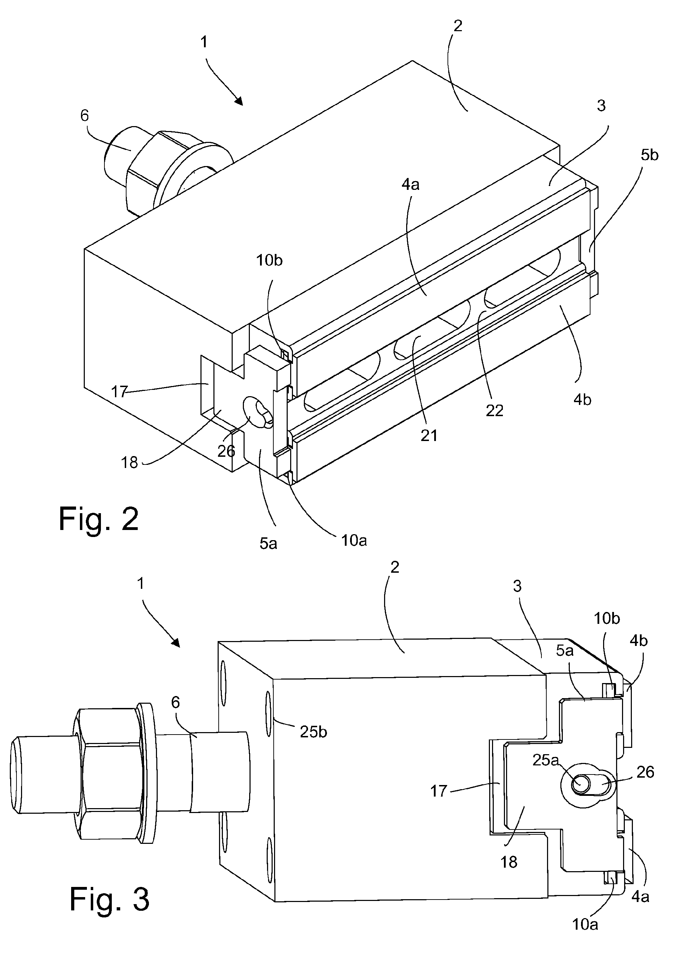

Fig. 1 is an exploded view of a first embodiment of a guide block assembly 1 of the present invention. Fig. 2 shows the same in perspective seen from above and in assembled state, and fig. 3 is an end view of the same. In figs. 2 and 3 the fasteners, such as screws and bolts, seen in fig. 1 have been left out to better visualize the core components.

The first embodiment of a guide block assembly 1 comprises the main components: a rear part 2, a front part 3, two thrust slats 4a,4b, and end stops 5a,5b having a planar outline corresponding substantially to the cross-section of the front part 3, in the present embodiment a substantial T-shaped outline and cross-section. The guide block assembly 1 has a rod coupling 6, which in the present case may correspond substantially to the rod coupling of the prior art, thus having a rod 7, a nut 8 and a washer 9. The guide block assembly 1 may however within the scope of the present invention be secured to the frame of the band saw in any other suitable manner. In an embodiment without a rear part 2 the front part 3 can even be directly secured to said frame.

The guide block assembly 1 of the present invention utilities spaced apart thin flat thrust slats 4a,4b instead of the large solid thrust part or large flat thrust plate, that the prior art of guide block assemblies hitherto has utilized and deemed essential to avoid accumulations of residues from the milling process entering the guide block assembly, such as e.g. saw dust and resins, and residues and debris from the thrust component.

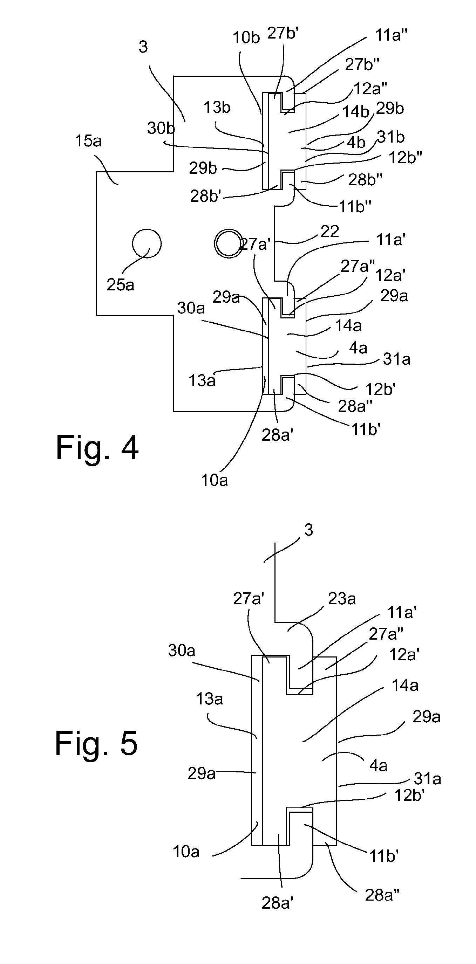

The thin thrust slats 4a,4b are inserted in corresponding receiving means in form of respective parallel grooves 10a,10b configured to keep the thrust slats 4a,4b secured to the front part 3 when the saw blade runs during the cutting process. In the present embodiment the grooves 10a,10b have a substantial C-shape in cross-section and the thrust slats 4a,4b are substantially H-shaped in cross-section so that the free ends 11a', 11b'; 11a", 11b" of the C, defined by free elongate edges, fit into the gaps 12a',12b';12a",12b" between the legs of the H from above and from below respectively, as seen best in fig. 4.

The C-shape provides a groove 10a,10b with a bottom 13a,13b that is wider than the opening 14a, 14b, so that when a thrust slat 4a,4b is inserted or withdrawn by sideways sliding into or out of the groove 10a, 10b, as indicated by double-pointed arrow A, from one of the end faces 15a,15b of the front part 3, while at least one of the end stops 5a, 5b is dismantled, the thrust slat 4a,4b cannot drop out of the groove 10a, 10b. A thrust slat 4a,4b may be slightly shorter than its groove 10a,10b to allow absorption of frictional energy and provide space from dimensional change due to frictional heating. For example if the thrust slat 4a,4b is 165 mm the groove 10a,10b can e.g. be 0.1 mm longer.

The rear part 2 has a first coupling profile 16, in form of a longitudinal rear groove 17, that faces towards a mating protruding second coupling profile 18 of the front part 3. In the present exemplary embodiment the rear groove 17 has a simple square or rectangular profile that fits together with a corresponding square or rectangular profile of the second coupling profile 18, so that the female second coupling profile 18 easily can be introduced in the first coupling profile 16 in a movement co-axial with the axis of the rod 7 or by sideways movement in the direction of the arrow A, whatever is the most convenient. The first coupling profile 16 has first holes 19 to receive first fasteners 20 that pass through second holes 21 in a center section 22 of the front part 3 between the grooves 10a, 10b, which center section 22 includes the second coupling profile 18.

In the present exemplary embodiment of a guide lock assembly 1, three elongate second holes 21 through the center section 22 receive the first fasteners 20, such as six bolts or screws, two through each elongate through-going second hole 21. The first fasteners 20 are secured in the second holes 21 to assemble the rear part 2 and the front part 3 with or without the thrust slats 4a, 4b, and while the rear part 2 is mounted to the band saw or not.

When the thrust slats 4a,4b have been inserted in their respective grooves 10a, 10b, the end stops 5a, 5b are mounted to the respective end faces 23a,23b of the front part 3 by means of second fasteners 24a,24b, such as screws, through third holes 25a in the end face 23a,23b of the front part 3 and fourth holes 26 in the end stops 5a,5b, to close the ends of the grooves 10a,10b and confine, optionally retain, the thrust slats 4a,4b inside said grooves 10a, 10b.

The engagement between the H-shaped profile of the thrust slats 4a,4b and the C-shaped grooves 10a, 10b is seen better in the enlarged scale end view of fig. 4 of the front part 3 with mounted thrust slats 4a,4b, and in the further enlarged fragment of fig. 4 seen in fig. 5 of the lower C-shaped groove 10a with corresponding inserted lower thrust slat 4a.

The C-shape of the lower C-shaped groove 10a terminates in bend opposite facing free edges and free ends 11a', 11b' the distance between which delimits the opening 14a that is narrower than the width of bottom 13a of the groove 10a. The bend opposite facing free upper end 11a' and free lower end 11b' of the lower groove 10a mates with, and is accommodated in, a corresponding upper gap 12a' and lower gap 12b', respectively, between opposite respective inner and outer legs 27a',27a ";28a',28a" of the H-shaped thrust slat 4a. Similarly the C-shape of the upper C-shaped groove 10b terminates in bend opposite facing free ends 11a",11b" the distance between which delimits the opening 14b that is narrower than the width of the bottom 13b of the groove 10b. The bend opposite facing free upper end 11a" and lower end 11b" of the upper groove 6b mates with and is accommodated in a corresponding upper gap 12a" and lower gap 12b" between opposite respective inner and outer legs 27b',27b'';28b',28b'' of the upper H-shaped thrust slat 4b. The above referred "widths" corresponds to the heights of the respective grooves 10a,10b when using the orientation of figs. 4 and 5. Further the term "free end" in relation to the C-shaped grooves 10a,10b and H-shaped thrusts slats is used in relation to the elongate free edges of these profiles.

As seen best in figs. 4 and 5 the thickness of a thrust slat 4a,4b is preferably selected so that a thrust slat 4a,4b does not rest on the bottom 13a, 13b of the groove 10a, 10b. Thus there is preferably a free space 29a,29b left between the bottom 13a,13b of the groove 10a,10b and the inner legs 27a',28a';27b',28b' of the H-shaped thrust slats 4a,4b. This free space 29a,29b preserve the interior face 30a,30b of the thrust slat 4a,4b, thus the face 30a,30b of the thrust slat not being in operative contact with the saw blade, from being worn, so that this interior face 30a,30b can be used as the outer face 31a,31b of the thrust slat 4a,4b later.

When the guide block assembly 1 is mounted on the band saw the exterior legs 27a",28a",27b",28b" of the H-shaped thrust slats 4a,4b is in abutting contact with the exterior face of the free ends 11a',11b';11a",11b" of the receiving means 10a, 10b of the front part 3 and is subjected to an additional pressure force by the orbiting saw blade towards said exterior face of the free ends 11a',11b';11a",11b" of the grooves 10a,10b when the saw band is in operation.

The saw blade presses against a thrust slat 4a,4b towards the front part 3 but the thrust slat 4a,4b is not thicker than a space is left to prevent wear on the face of a thrust slat 4a,4b not in contact with the saw blade.

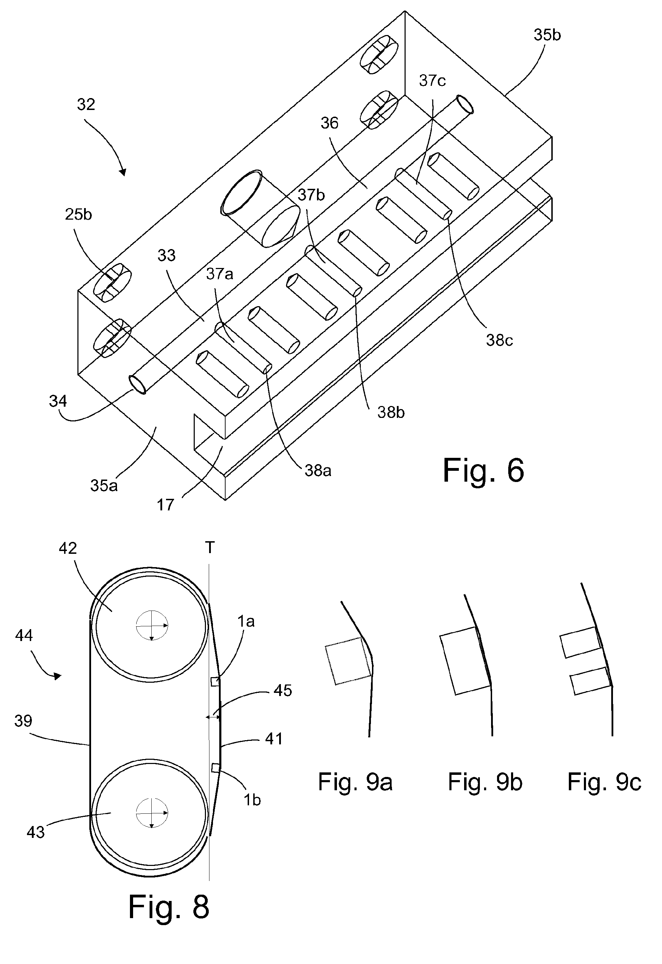

Fig. 6 is a transparent perspective view of a second embodiment of a rear part 32 of a modified guide block assembly 1 of the present invention. The second embodiment of the rear part 32 corresponds substantially to the first embodiment of a rear part 2, and for like part same reference numerals are used. Transparency is applied to fig. 6 only to visualize the intake manifold 33. Rather the rear part 32, the front part 3 and the thrust slats 4a,4b are all solid parts.

The second embodiment of the rear part 32 differs from the first embodiment of a rear part 2 in that it has an embedded intake manifold 33 for distributing a flow of e.g. a lubricating agent, a coolant agent, and/or a cleaning agent. The intake manifold 33 has an inlet 34 in one or both end faces 35a,35b. The inlet 34 of the intake manifold 33 communicates with a central fluid channel 36 that divides into three delivery pipes 37a,37b,37c with respective outlets 38a,38b,38c that end in the second holes 21 at the center section 22 for delivering a suitable agent between the thrust slats 4a,4b, in order to treat the saw blade (not shown) with said agent. More or less delivery pipes may be provided along the longitudinal rear groove 17, e.g. spaced from and aligned with the first holes 19.

The rod coupling 6 allows the guide block assembly 1 to be rotated into correct position in relation to the saw blade, irrespective of any other features of the guide block assembly and of the band saw, and irrespective of the rear part being part of an integral unit or is constituted by the back of the front part. Fourth holes 25b may be provided on the rear part 2,32, which fourth holes are adapted to be coupled to suitable means on the frame of the band saw, such means e.g. being tailstock screws, to further adjust the degree and position of engagement between the band saw and the saw blade, and thus adjusting the tensioning of said saw blade.

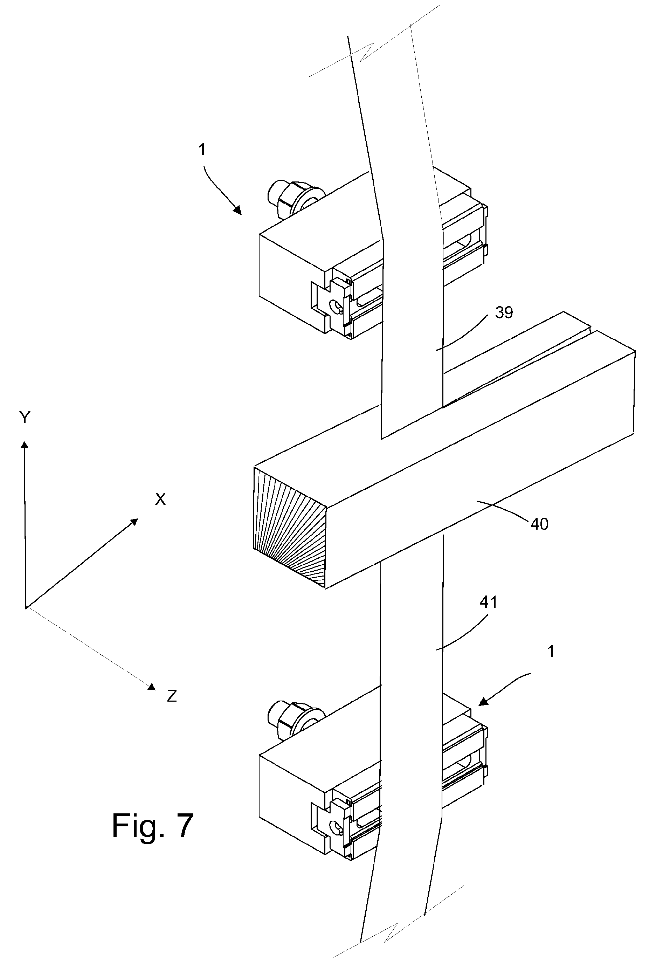

Fig. 7 shows two guide block assemblies 1 mounted to distend a section of a fragment of a saw blade 39 during cutting a workpiece 40. The saw blade 39 is offset the pulleys of the band saw (not shown) and has teeth (not shown). The saw blade 39 moves in the Y-direction to cut the workpiece 40 that moves in the X-direction. It should be noted that any kind of workpiece can be cut with the band saw provided with the guide block assemblies of the present invention. The workpiece 40 shown in fig. 7 is only shown by way of example, and should not be construed as limiting the usability and options of the present invention.

As seen in the principle sketch of fig. 8, during the cutting the saw blade 39 of a vertical band saw 44 orbits around the upper pulley wheel 42, the idle pulley wheel, and the lower pulley wheel 43, the drive pulley wheel. The guide block assemblies 1a, 1b keep the saw blade 39 tensioned with an offset 45 in the Z-direction and substantially free of vibrations at the section 41 of the saw blade 39 between the opposite guide block assemblies 1. The section 41 of the saw blade 39 is thus offset from the tangent plane T to the pulley wheels 42,43.

The principle sketches of figs. 9a-c show tensioning of the saw blade when it passes a known guide block assembly, and a guide block assembly of the present invention.

In fig. 9a the saw blade is arranged in the offset position by means of a conventional guide block assembly with a thrust plate, as indicated by the dotted box. The saw blade is subjected to very abrupt breaks at the transit of the known guide block assembly, and keeping the saw blade straight between the outmost contact edges of the known guide block assembly and close to the workface of the thrust plate is almost impossible even when the offset is set high. The radius of curvature of the tensioned saw blade may e.g. be about 10 m for this conventional guide block assembly set-up.

Fig. 9b shows an off set band saw in a set-up that resembles the set-up shown in fig. 9a. The guide block assembly is however made higher to illustrate the effect of a change of curvature of the transiting saw blade, in that the breaks of the saw blade at the transit of the guide block assembly are less abrupt. A 20-50% higher guide block assembly may e.g. result in that the radius of curvature of the tensioned saw blade is increased to a length of up to about 15 m in this modified guide block assembly set-up.

The radii given in relation to figs. 9a-c are only given as examples, and that other radii are possible for other set-ups.

Instead of using the high solid thrust block or high thrust plate seen in fig. 9b, which would generate a lot of heat when the saw blade pass over, the same or better thrust effect is achieved by the present invention by using spaced apart opposite thrust slats, as illustrated in principle in fig. 9c, with the further advantage that less heat is developed. Furthermore, since the thrust slats can be made much lower they cannot bulge as the restrained larger thrust plates of the prior art. So the thrust slat for use in the present invention can be made as thin as the known thrust plate id desired, and even thinner as well. The height of the workface are the same as shown in fig. 9b, while the actual workface, which is subjected to wear is the same as shown in fig. 9a. This innovative design results in that stress on the saw band and the development of heat is heavily reduced, in particular due to the straightening of the saw blade and the less abrupt transit of the saw blade when it pass over the guide block assembly of the present invention.

So the guide block assembly of the present invention has, despite the prejudice within the art, an area of the thrust face that faces the orbiting saw blade that is kept out of contact with the saw blade. The advantages of using a thin thrust slat instead of a thick heavy thrust block includes but are not limited to the fact that the overall dimensions of the guide block assembly can promptly be restored to previous conditions and settings. Re-tensioning and adjustment of the tension of the saw blade can be completely dispensed with, or at least be very minimal, because the saw blade tensioning and control of same take considerable less time than when a conventional guide block assembly are refitted with a thrust block, and the set-up of the guide block assembly can be standardized due to the thrust slat having substantially same dimensions and positions at all times.

So the thrust slats may come in standard sizes for a certain band saw so that the same dimensions easily are reinstated upon replacement of a used thrust slat. A further advantage is that replacement of a thrust slat is very fast because only a small part of the entire guide block assembly of the present invention needs to be handled. The guide block assembly needs not be dismantled at all from the band saw frame to replace the thrust slats. Band saw down time and tool costs are substantially reduced, and due to the less contact area with the saw blade also higher production speed due to higher running speed of the saw blade is achieved. The novel guide block assembly stabilizes the saw blade efficiently, so that vibrations and chattering are eliminated, development of heat is controlled better and less heat is developed even though the speed of the saw blade is very high to meet demands for cutting large batches of workpieces at minimum time. In case of using a rear part with a manifold no additional equipment, such as a nozzle needs to be mounted to the band saw frame.

The guide block assemblies of the present invention have many advantageous over the prior art devices for the same purpose. Such advantages include but are not limited to the advantages stated above.

Despite the prejudices within the art the present inventor has managed to innovate the structure of a guide block assembly so that heat development is substantially reduced, even for modern band saws that need to run with speeds as high as between 100 - 120 m/s to keep production rates high.

An exemplary H-shaped thrust slat may be 169.9 mm ± 0.1 mm long, 20 ± 0.1 mm high, 7,75 mm ± 0.25 mm thick, where one or both of the respective inner and outer legs of the H-shaped thrust slat is/are 2.5 mm ± 0.05 mm thick. It should be noted that the size, design and dimension of an H-shaped thrust slat is associated with the size, design and dimension of the receiving means. Thus the numbers given above can vary depending on the size, design and dimension of the front part. A thickness of a thrust slat between 7 - 11 mm is however foreseen as being particular advantageously seen from a cost perspective.

## Claims

1. A guide block assembly (1) for controlling a saw blade (39) of a band saw (44) during cutting, which guide block assembly (1) includes
- a mounting part (2,3;32,3) having a rear part (2;32) adapted for securing the guide block assembly (1) to the band saw frame and a front part (3) for detachably securing a thrust part,
**characterized in that**
- the thrust part includes at least two thrust slats (4a,4b) detachable secured in respective at least two receiving means (10a,10b) of or on a front face of the front part (3) of the mounting part, and which thrust slats (4a,4b) are aligned spaced apart from each other.

2. A guide block assembly (1) according to claim 1, **characterized in that** the guide block assembly (1) comprises retaining means for retaining the thrust slats (4a,4b) in the receiving means (10a,10b), which retaining means is selected from the group comprising engagement means, force fitting means, snap coupling means, male/female coupling means, and at least one end stop (5a,5b) at an end of the front part (3).

3. A guide block assembly (1) according to claims 1 or 2, **characterized in that** the receiving means (10a,10b) of the front part (3) of the mounting part are opposite parallel grooves (10a,10b) for detachably securing a respective thrust slat (4a,4b).

4. A guide block assembly (1) according to any of the preceding claims 1, 2 or 3, **characterized in that** at least one of the at least two thrust slats (4a,4b) is an H-profile and the corresponding receiving means is a groove (10a,10b) having a C-shaped cross-section.

5. A guide block assembly (1) according to any of the preceding claims 1 - 4, **characterized in that** the rear part (2,32) has a first coupling profile (17) facing towards a mating second coupling profile (18) of the front part (3), preferably the first coupling profile (17) is a female profile and the second coupling profile (18) is a male profile.

6. A guide block assembly (1) according to any of the preceding claims 1 - 5, **characterized in that** an elongate center section (22) of the front part (3) between the spaced apart receiving means (10a,10b) has at least two through-openings or holes (21) for securing said front part (3) to said rear part (2;32) through the front face of said front part (3).

7. A guide block assembly (1) according to claim 6, **characterized in that** the front part (3) is secured to the rear part (2;32) by means of bolts (20) through the center section (22), preferably the bolts (20) are countersunk in relation to the front face of the front part (3).

8. A guide block assembly (1) according to any of the preceding claims 1 - 7, **characterized in that** the length of a receiving means (10a,10b) is longer than the length of a thrust slat (4a,4b).

9. A guide block assembly (1) according to any of the preceding claims 1 - 8, **characterized in that** the rear part (2;32) has an integrated manifold (33) for supplying a fluid agent to the saw blade (39), preferably the manifold (33) discharge into a plurality of outlets (38a,38b,38c) at the center section (22) of the front part (3).

10. A guide block assembly (1) according to any of the preceding claims 1 - 9, **characterized in that** the fluid agent is selected from the group of agents including a coolant agent, a lubricating agent, and/or a cleaning agent, optionally the fluid agent comprises air, gas, water, and/or oil.

11. A guide block assembly (1) according to any of the preceding claims 1 - 10, **characterized in that** at least an outer face (31a,31b) of the thrust slat (4a,4b) has a friction-reducing surface.

12. A guide block assembly (1) according to any of the preceding claims 2 - 11, **characterized in that** a single end stop (5a,5b) spans the open ends of at the at least two receiving means (10a,10b) and can be secured to an end part or end face of the front part (3).

13. A method of mounting a thrust slat (4a,4b) in the guide block assembly (1) according to any of the preceding claims 2 - 12, **characterized in that** the method comprises the steps of
(a) inserting the at least two thrust slats (4a,4b) into the respective at least two receiving means (10a,10b) by sideways sliding from one end face of the front part (3) towards the opposite end face of the front part (3), and optionally
(b) securing at least one end stop (5a,5b) at an end face (31a,31b) of the front part (3).

14. A method of mounting the guide block assembly (1) according to any of the preceding claims 1 - 12 to a band saw (44), **characterized in that** the method comprises
- mounting the front part (3) to the rear part (2; 32) via the front face of the front part (3),
- mounting the rear part (2; 32) to the band saw so that the thrust slats (4a,4b) are in contact with the saw blade to tension said saw blade (39) during cutting.

15. A band saw provided with two guide block assemblies (1a, 1b) according to any of the preceding claims 1 - 12 spaced apart from each other at a cutting section (41) of the saw blade (39).

16. A thrust slat (4a,4b) for a guide block assembly (1) according to any of the preceding claims 1 - 12.
